# EUROPÄISCHE PATENTSCHRIFT

(11) **EP 2 721 121 B1**
(45) Veröffentlichungstag und Bekanntmachung des Hinweises auf die Patenterteilung: **08.11.2017**
(21) Anmeldenummer: 12729871.9
(22) Anmeldetag: 14.06.2012
(51) Int. Cl.: C09K 21/04

(54) **VERWENDUNG EINES ALTPAPIER MIT FLAMMSCHUTZMITTELZUSAMMENSETZUNG ALS WÄRMEDÄMMSTOFF**
USE OF OLD PAPER WITH FLAME RETARDANT COMPOSITION AS THERMAL INSULATION MATERIAL
UTILISATION DE VIEUX PAPIERS COMPRENANT UNE COMPOSITION RETARDATRICE DE FLAMME COMME ISOLANT THERMIQUE

(30) Priorität: 14.06.2011 DE 202011102812 U
(43) Veröffentlichungstag der Anmeldung: 23.04.2014
(73) Patentinhaber: Häffner International GmbH, 20459 Hamburg (DE)
(72) Erfinder: STEINGRAEBER, Jörg, 20459 Hamburg (DE); STÖCKLE, Markus, 20459 Hamburg (DE)
(74) Vertreter: Kossak, Sabine
(86) Internationale Anmeldenummer: PCT/EP2012/002552
(87) Internationale Veröffentlichungsnummer: WO 2012/171662

(56) Entgegenhaltungen:
- EP-A1- 1 927 694
- WO-A1-98/24604
- JP-A- 2010 159 508
- US-A- 4 182 681
- US-A1- 2006 135 386

## Beschreibung

Gegenstand der Erfindung ist die Verwendung eines Altpapier, enthaltend eine Flammschutzmittelzusammensetzung als Wärmedämmstoff.

Zur Wärmedämmung werden gegenwärtig neben anorganischen Werkstoffen wie Glas- und Steinwolle auch organische Materialien wie Styropor, Schafwolle oder zellulosehaltige Materialien wie Sägemehl, Kork oder Filz verwendet. Auch zerfasertes Zeitungspapier kommt hier in großem Maße zur Verwendung. Nachteil bei Dämmstoffen aus Altpapier wie beispielsweise Zeitungspapier ist die besonders hohe Entzündungsgefahr.

Aus diesem Grund werden Dämmstoffen aus Zellulosefasern bzw. aus Altpapier verschiedenste Substanzen in unterschiedlichen Konzentrationsbereichen zugesetzt, um einen entsprechenden Flammschutz zu gewährleisten.

Als Flammschutzmittel finden hauptsächlich Borsäure oder Borax Verwendung. Der Vorteil dieser borhaltigen Substanzen ist, dass sie nicht nur eine flammschützende Wirkung besitzen, sondern auch zusätzlich biozide Eigenschaften aufweisen. Seit neuestem sind jedoch Borsäure und Borax als reproduktionstoxisch eingestuft, so dass sie in Produkten, die mit Prüf- oder Gütesiegeln für ein besonders umweltschonendes Produkt versehen werden sollen, nicht mehr eingesetzt werden können. So ist es beispielsweise nicht mehr zulässig, borsäure- oder borathaltige Produkte mit dem sogenannten Umweltengel zu kennzeichnen. Zudem sind Borsäure und Borax hochpreisige Chemikalien und beeinflussen den Endpreis des Wärmedämmstoffs negativ. Hierdurch wird der Vorteil, der durch die Verwendung des kostengünstigen Altpapiers erreicht wird, wieder negiert.

Es ist daher bereits versucht worden, borhaltige Flammschutzmittel zu ersetzen. Aus der DE 44 44 433 C2 ist ein Wärmedämmstoff aus Altpapier bekannt, der als Brandschutzmittel Ammoniumsulfat enthält. Dabei werden Mengen von 5 bis 50 Gew.-% Ammoniumsulfat dem Altpapier zugesetzt, um eine flammhemmende Wirkung zu erhalten. Ammoniumsulfat besitzt jedoch nur geringe biozide Eigenschaften. Als Brandschutzmittel selbst ist Ammoniumsulfat nur wenig wirksam.

WO 98/24604 A1 beschreibt eine Flammschutzmittelzusammensetzung, die zur Imprägnierung von Papier geeignet ist. Diese Zusammensetzung enthält verschiedene Flammschutzmittel, wie Monoammoniumphosphat, Diammoniumphosphat oder Magnesiumhydroxid.

Aus JP 2010 159508 A ist ein Material mit Flammschutzeigenschaften bekannt. Das Material wird mit einer Flammschutzbeschichtung und mit einer antimikrobiellen Beschichtung versehen. Als Flammschutzmittel werden stickstoffhaltige kondensierte Phosphorsäureverbindung genannt. Als antimikrobielles Mittel sind Silberionen offenbart.

US 2006/135386 A1 offenbart Zusammensetzungen mit n-Propylbromid als Flammschutzmittel. n-Propylbromid ist nicht giftig und wirtschaftlich einsetzbar.

Aus EP 1 927 694 A1 ist ein Verfahren zum antimikrobiellen Ausrüsten von Fasern und Textilien und eine hierfür verwendete antimikrobielle Zubereitung bekannt. Die Zusammensetzung enthält als antimikrobiellen Wirkstoff im Wesentlichen eine desensibilisierende Silberkomponente, wie z.B. Silberchlorid.

US 4,182,681 A beschreibt einen Wärmedämmstoff aus Papier, wobei das Papier mit einer Brandschutzzusammensetzung imprägniert ist. Die Brandschutzzusammensetzung hat eine komplexe Zusammensetzung aus Borax, Ammoniumsulfat, Aluminiumsulfat, Natriumcarbonat, Silicagel und Diammoniumphosphat. Borax ist dabei mit 42,5 % die Hauptkomponente.

Aufgabe der vorliegenden Erfindung ist es somit, einen Wärmedämmstoff aus Altpapier bereitzustellen, der flammhemmend ausgerüstet ist und einen mindestens genauso guten Flammschutz wie die bekannten Materialien besitzt. Zudem soll der Wärmedämmstoff biozid ausgerüstet sein, wobei die verwendeten Chemikalien preisgünstig und toxikologisch unbedenklich sein sollen.

Die Aufgabe wird erfindungsgemäß gelöst durch die Verwendung eines Altpapiers gemäß Patentanspruch 1.

Weitere Ausführungsformen sind Gegenstand der Unteransprüche oder nachfolgend beschrieben.

Die Flammschutzmittelzusammensetzung enthält somit zum einen eine Flammschutzkomponente und zum anderen eine biozide Komponente. Die Flammschutzkomponente ist ein Gemisch aus mindestens zwei Substanzen ausgewählt aus der Gruppe bestehend aus Aluminiumhydroxid, Ammoniumsulfat, Natriumsulfat, Monoammoniumphosphat, Diammoniumphosphat, Triammoniumphosphat, Ammoniumpolyphosphat, Aluminiumsulfat, Trinatriumphosphat, Calciumhydroxid und Magnesiumhydroxid, bevorzugt ein Gemisch aus Aluminiumhydroxid, Ammoniumsulfat und Ammoniumpolyphosphat. Die Biozidkomponente ist ein Silbersalz, bevorzugt Silbercitrat, Silberbenzoat, Silberoxid und/oder Silberbehenat, besonders bevorzugt Silberbenzoat, oder elementares Silber. Das Silbersalz ist bevorzugt in einer Menge von 1 bis 100 ppm in der Wärmedämmstoffzusammensetzung enthalten. Der erfindungsgemäß verwendete Wärmedämmstoff enthält erfindungsgemäß keine borhaltigen Verbindungen, insbesondere kein Borax, keine Borsäure oder keine Borate wie Zinkborat.

Besonders vorteilhafte Zusammensetzungen enthalten als erste Substanz der Flammschutzkomponente 40 bis 90 Gew.-% Ammoniumsulfat.

Blähgraphit ist hinsichtlich des Flammschutzes eine zusätzlich vorteilhafte Komponente, da Blähgraphit bei Hitze aufquillt und durch eine bis zu vierfache Volumenzunahme Flammen erdrücken kann. Flammschutzmittel wie Amidosulfonsäure, Ammoniumsulfamat und Natriumcarbonat tragen ebenfalls zur Flammhemmung bei.

Der erfindungsgemäße Wärmedämmstoff besteht bevorzugt aus 75 bis 95 Gew.-% Altpapier und 5 bis 25 Gew.-%, vorzugsweise 8 bis 12 Gew.-% Flammschutzmittelzusammensetzung, wobei sich die Komponenten zu 100 Gew.-% ergänzen.

Überraschenderweise wurde herausgefunden, dass durch die Kombination einer Reihe bekannter Flammschutzmittel synergetische Effekte stattfinden, so dass die Flammschutzwirkung potenziert wird und ein höherer Flammschutz erreicht wird, als wenn die Einzelsubstanzen oder Borsäure und borathaltige Mittel eingesetzt werden.

Überraschenderweise wurde festgestellt, dass Silbersalze wie Silberbenzoat, Silbercitrat oder Silberoxid oder elementares Silber ausgesprochen geeignet sind, in genannten Dämmstoffen einen bioziden Schutz, bei äußerst geringer Dosierung (1 - 100 ppm), hervorzurufen. Außerdem decken die genannten Substanzen einen breiteren bioziden Wirkungskreis ab als Borsäure und Borax und sind auch aufgrund ihrer im Vergleich geringen Toxizität den anderen Stoffen vorzuziehen.

Ein weiterer Vorteil des erfindungsgemäßen Flammschutzes liegt in der geringeren Dosierung. So können Dosierungen zwischen 5 - 10%, bezogen auf das Zellulosedämmschutzmaterial, einen ausreichenden Flamm- und Biozidschutz bewirken.

Das Flammschutzmittel kann nach bekannten Methoden aufgebracht werden. Beispielsweise kann die Flammschutzmittelzusammensetzung dem erfindungsgemäßen Wärmedämmstoff beim Auffasern des Altpapiers in entsprechenden Mühlen zugemischt werden. Das Flammschutzmittel liegt in diesem Fall als trockenes Pulver vor.

### Beispiele:

### Beispiel 1

Es wurde durch einfaches Vermischen der einzelnen Komponenten ein Flammschutzmittel mit folgender Zusammensetzung hergestellt:
1000 g Ammoniumpolyphosphat,
6000 g Ammoniumsulfat,
3000 g Aluminiumhydroxid,
0,10 g Silberbenzoat.

### Beispiel 2

Es wurde durch einfaches Vermischen der einzelnen Komponenten ein Flammschutzmittel mit folgender Zusammensetzung hergestellt:
700 g Ammoniumsulfat,
50 g Blähgraphit,
0,12 g Silbercitrat,
12 g Aluminiumhydroxid,
50 g Ammoniumpolyphosphat,
200 g Amidosulfonsäure.

### Beispiel 3

Es wurde durch einfaches Vermischen der einzelnen Komponenten ein Flammschutzmittel mit folgender Zusammensetzung hergestellt:
800 g Ammoniumsulfat,
0,14 g Silbercitrat,
13,8 g Aluminumhydroxid,
100 g Ammoniumpolyphosphat,
100 g Amidosulfonsäure.

### Beispiel 4

Es wurde durch einfaches Vermischen der einzelnen Komponenten ein Flammschutzmittel mit folgender Zusammensetzung hergestellt:
800 g Ammoniumsulfat,
11,86 g Aluminumhydroxid,
0,14 g Silberbenzoat,
40 g Ammoniumpolyphosphat,
200 g Amidosulfonsäure.

### Beispiel 5

Es wurde durch einfaches Vermischen der einzelnen Komponenten ein Flammschutzmittel mit folgender Zusammensetzung hergestellt:
600 g Ammoniumsulfat,
11,88 g Aluminiumhydroxid,
0,12 g Silberbenzoat,
300 g pulverisierte Pottasche,
60 g Ammoniumpolyphosphat,
80 g Amidosulfonsäure.

### Beispiel 6

Es wurde durch einfaches Vermischen der einzelnen Komponenten ein Flammschutzmittel mit folgender Zusammensetzung hergestellt:
250 g Ammoniumsulfat,
250 g Aluminiumhydroxid,
14,85 g Aluminiumhydroxid,
0,15 g Silberbehenat,
250 g pulverisierte Pottasche,
180 g Ammoniumpolyphosphat,
80 g Amidosulfonsäure.

### Beispiel 7

Ein beispielhafter flammgeschützter Wärmedämmstoff aus Altpapier wurde folgendermaßen hergestellt:
Das vorzerkleinerte Altpapier wurde zusammen mit einer Flammschutzmischung nach einem der Beispiele 1 bis 6 in einer Papiermühle (Hammermühle, Schneidmühle o. ähnliches) zermahlen. Durch den Zermahlvorgang und die weiteren Verarbeitungsschritte wurden die Flammschutzmischung und das zerfaserte Altpapier (Cellulose) in ausreichender Weise vermischt. Anschließend wurde das Material á 25 kg Ballen in PE-Folie verpackt.
So wurden zum Beispiel mit 15 kg der erfindungsgemäßen Flammschutzmittel-Mischung insgesamt 150 kg flammgeschützter Wärmedämmstoff hergestellt.

### Beispiel 8

Das Brandverhalten eines erfindungsgemäßen Wärmedämmstoffes nach DIN 4102 (Teil 1, Ausgabe Mai 1998, Abschnitt 6.2.5) wurde untersucht.

Der Wärmedämmstoff enthielt das Flammschutzmittel gemäß Beispiel 4, wobei der Wärmedämmstoff aus 10 Gew.-% Flammschutzmittel und 90 Gew.-% Cellulosematerial aus Altpapier bestand.

Der untersuchte Dämmstoff ist ein loser Dämmstoff, bestehend aus flammgeschützten Cellulosefasern. Die Schüttdichte liegt zwischen 25 kg/m³ und 65 kg/m³.

Es wurden Brandversuche zum Nachweis der Brennstoffklasse B2 nach DIN 4102, Teil 1, Abschnitt 6.2.5) durchgeführt. Für die Prüfung wurde der Probenhalter für lose Fülldämmstoffe mit der Cellulosefaser gefüllt. Es wurden mehrere Proben mit einer Schüttdichte von 25 kg/m³ (Versuche 6 und 7) und 65 kg/m³ (Versuche 1 bis 5) hergestellt. Es erfolgte eine Flächenbeflammung 40 mm oberhalb des unteren Randes in der Mitte der Probe.

Die Ergebnisse sind den Tabellen 1 und 2 zu entnehmen.

**Tabelle 1: Brandverhalten des untersuchten Wärmedämmstoffes bei einer Schüttdichte von 65 kg/m³, Methode DIN 4102**

| | Versuch Nr. | | | | |
|---|---|---|---|---|---|
| | 1 | 2 | 3 | 4 | 5 |
| Entzündung | sofort | sofort | sofort | sofort | sofort |
| größte Flammenhöhe | | | | | |
| innerhalb 20 s [cm] | 7 | 6 | 6 | 6 | 7 |
| erreicht nach [s] | 10 | 15 | 7 | 7 | 4 |
| Messmarke erreicht nach [s] | - | - | - | - | - |
| Flammen erloschen nach [s] | 15 | 15 | 15 | 15 | 15 |
| Ende des Nachglimmens [s] | - | 23 | 27 | 45 | 23 |
| Rauchentwicklung | gering | gering | gering | gering | gering |
| Filterpapier entzündet sich nach [s] | - | - | - | - | - |

**Tabelle 2: Brandverhalten des untersuchten Wärmedämmstoffes bei einer Schüttdichte von 25 kg/m³, Methode DIN 4102**

| | Versuch Nr. | |
|---|---|---|
| | 6 | 7 |
| Entzündung | sofort | sofort |
| größte Flammenhöhe | | |
| innerhalb 20 s [cm] | 6 | 5 |
| erreicht nach [s] | 7 | 5 |
| Messmarke erreicht nach [s] | - | - |
| Flammen erloschen nach [s] | 15 | 15 |
| Ende des Nachglimmens [s] | 27 | 24 |
| Rauchentwicklung | gering | gering |
| Filterpapier entzündet sich nach [s] | - | - |

Alle geprüften Proben (Versuche 1 bis 5, 6 und 7) bestanden die Prüfung nach DIN 4102, Teil 1, Abschnitt 6.2.5 und erfüllen damit die Anforderungen an normalentflammbare Baustoffe der Baustoffklasse B2. Die Abweichungen zwischen den einzelnen Proben liegen im Bereich üblicher Abweichungen.

Probenteile fielen weder brennend noch glimmend ab. Damit gilt der Baustoff bei der Prüfung nach DIN 4102, Teil 1, Abschnitt 6.2.5 als nicht brennend abtropfend nach Abs. 6.2.6.

Es wurde nicht geprüft, ob der Wärmedämmstoff auch die Anforderungen an einen Baustoff der Baustoffklasse B1 oder einer anderen höheren Klasse erfüllt, was somit nicht ausgeschlossen ist.

### Beispiel 9

Das Brandverhalten eines erfindungsgemäßen Wärmedämmstoffes nach DIN EN ISO 11 925-2 wurde untersucht.

Der Wärmedämmstoff enthielt das Flammschutzmittel gemäß Beispiel 4, wobei der Wärmedämmstoff aus 10 Gew.-% Flammschutzmittel und 90 Gew.-% Cellulosematerial aus Altpapier bestand.

Der untersuchte Dämmstoff ist ein loser Dämmstoff bestehend aus flammgeschützten Cellulosefasern. Die Schüttdichte liegt zwischen 25 kg/m³ und 65 kg/m³.

Für die Prüfung wurden die losen Cellulosefasern in den Probenhalter gemäß DIN EN ISO 11 925-2, Abs. 4.5 mit den Maßen gemäß WG CUAP cluster doc. N 47 (2003) Annex G " In-situ-formed loose fill thermal insulation-materials" mit einer Schüttdichte von 25 kg/m³ und 65 kg/m³ gefüllt. Es wurden jeweils mehrere Proben bei derselben Schüttdichte untersucht.

Die Konditionierung der Proben erfolgte nach DIN EN 13 238, Abschnitt 4.

Die Beflammung erfolgte bei Flächenbeflammung 40 mm oberhalb des unteren Randes in der Mitte der Probe.

Die Ergebnisse sind den Tabellen 3 und 4 zu entnehmen.

**Tabelle 3: Brandverhalten des untersuchten Wärmedämmstoffes bei einer Schüttdichte von 65 kg/m³, Methode DIN EN ISO 11 925-2**

| | Versuch Nr. | | | | | |
|---|---|---|---|---|---|---|
| | 8 | 9 | 10 | 11 | 12 | 13 |
| Entzündung der Probe | ja | ja | ja | ja | ja | ja |
| 150 mm oberhalb Beflammungspunkt erreicht nach [s] | nein | nein | nein | nein | nein | nein |
| Entzündung des Filterpapiers | nein | nein | nein | nein | nein | nein |
| max. Flammenhöhe innerhalb der Beobachtungszeit [cm] | 7 | 6 | 6 | 6 | 7 | 4 |

**Tabelle 4: Brandverhalten des untersuchten Wärmedämmstoffes bei einer Schüttdichte von 25 kg/m³, Methode DIN EN ISO 11 925-2**

| | Versuch Nr. | |
|---|---|---|
| | 14 | 15 |
| Entzündung der Probe | ja | ja |
| 150 mm oberhalb Beflammungspunkt erreicht nach [s] | nein | nein |
| Entzündung des Filterpapiers | nein | nein |
| max. Flammenhöhe innerhalb der Beobachtungszeit [cm] | 6 | 5 |

Der geprüfte Wärmedämmstoff erfüllt hinsichtlich seines Brandverhaltens die Anforderungen eines Baustoffes nach Baustoffklasse E. Die Abweichungen zwischen den einzelnen Proben liegen im Bereich üblicher Abweichungen.

## Patentansprüche

1. Verwendung eines Altpapier enthaltend eine Flammschutzmittelzusammensetzung, welche
- mindestens zwei Substanzen ausgewählt aus der Gruppe bestehend aus Aluminiumhydroxid, Ammoniumsulfat, Natriumsulfat, Monoammoniumphosphat, Diammoniumphosphat, Triammoniumphosphat, Ammoniumpolyphosphat, Aluminiumsulfat, Trinatriumphosphat, Calciumhydroxid und Magnesiumhydroxid,
- mindestens ein Biozid aus der Gruppe der Silbersalze und
- keine borhaltigen Verbindungen
enthält, als Wärmedämmstoff.

2. Verwendung gemäß Anspruch 1, **dadurch gekennzeichnet, dass** das Silbersalz Silbercitrat, Silberbenzoat, Silberoxid, Silberphosphat und/oder Silberbehenat ist, bevorzugt Silberbenzoat.

3. Verwendung gemäß Anspruch 1 oder 2, **dadurch gekennzeichnet, dass** das Silbersalz in einer Menge von 1 bis 100 ppm, bevorzugt 1 - 10 ppm, bezogen auf die Gesamtmenge des Wärmedämmstoffs, enthalten ist.

4. Verwendung gemäß einem der vorhergehenden Ansprüche, **dadurch gekennzeichnet, dass** kein Borax, keine Borsäure oder kein Zinkborat enthalten sind.

5. Verwendung gemäß einem der vorhergehenden Ansprüche, **dadurch gekennzeichnet, dass** die Flammschutzmittelzusammensetzung Aluminiumhydroxid, Ammoniumsulfat und Ammoniumpolyphosphat enthält.

6. Verwendung gemäß einem der vorhergehenden Ansprüche, **dadurch gekennzeichnet, dass** der Wärmedämmstoff aus
75 - 95 Gew.-% Altpapier und
5 - 25 Gew.-%, vorzugsweise 8 - 12 Gew.-% Flammschutzmittelzusammsetzung besteht,
wobei sich die Komponenten zu 100 Gew.-% ergänzen.

7. Verwendung gemäß einem der vorhergehenden Ansprüche, **dadurch gekennzeichnet, dass** die Flammschutzmittelzusammensetzung Blähgraphit enthält.

## Claims

1. The use of waste paper containing a flame retardant composition, which contains
- at least two substances selected from the group comprising aluminum hydroxide, ammonium sulfate, sodium sulfate, monoammonium phosphate, diammonium phosphate, triammonium phosphate, ammonium polyphosphate, aluminum sulfate, trisodium phosphate, calcium hydroxide, and magnesium hydroxide,
- at least one biocide from the group of silver salts,
and
- no boron-containing compounds
as a thermal insulating material.

2. The use according to Claim 1, **characterized in that** the silver salt is silver citrate, silver benzoate, silver oxide, silver phosphate, and/or silver behenate, preferably silver benzoate.

3. The use according to Claim 1 or 2, **characterized in that** the silver salt is contained in an amount from 1 through 100 ppm, preferably 1 - 10 ppm, relative to the total amount of the thermal insulating material.

4. The use according to one of the preceding claims, **characterized in that** no borax, no boric acid, and no zinc borate are included.

5. The use according to one of the preceding claims, **characterized in that** the fire retardant composition contains aluminum hydroxide, ammonium sulfate, and ammonium polyphosphate.

6. The use according to one of the preceding claims, **characterized in that** the thermal insulting material preferably comprises
75 - 95 wt.% waste paper and
5 - 25 wt.%, preferably 8 - 12 wt.% flame retardant composition,
wherein the components add up to 100 wt.%.

7. The use according to one of the preceding claims, **characterized in that** the fire retardant composition contains expanded graphite.

## Revendications

1. Utilisation de vieux papiers comprenant une composition retardatrice de flamme, qui contient
- au moins deux substances, sélectionnées dans le groupe comprenant de l'hydroxyde d'aluminium, du sulfate d'ammonium, du sulfate de sodium, du monophosphate d'ammonium, du diphosphate d'ammonium, du triphosphate d'ammonium, du polyphosphate d'ammonium, du sulfate d'aluminium, du triphosphate de sodium, de l'hydroxyde de calcium et de l'hydroxyde de magnésium,
- au moins un biocide appartenant au groupe des sels d'argent, et
- pas de composés contenant du bore,
en tant qu'isolant thermique.

2. Utilisation selon la revendication 1, **caractérisée en ce que** le sel d'argent est du citrate d'argent, du benzoate d'argent, de l'oxyde d'argent, du phosphate d'argent et/ou du béhénate d'argent, de préférence du benzoate d'argent.

3. Utilisation selon la revendication 1 ou 2, **caractérisée en ce que** le sel d'argent est présent en une quantité allant de 1 à 100 ppm, de préférence de 1 à 10 ppm, rapportée à la quantité totale de l'isolant thermique.

4. Utilisation selon l'une des revendications précédentes, **caractérisée en ce qu'**il n'y a pas de borax, pas d'acide borique ou pas de borate de zinc.

5. Utilisation selon l'une des revendications précédentes, **caractérisée en ce que** la composition retardatrice de flamme contient de l'hydroxyde d'aluminium, du sulfate d'ammonium et du polyphosphate d'aluminium.

6. Utilisation selon l'une des revendications précédentes, **caractérisée en ce que** l'isolant thermique se compose
de 75 à 95 % en poids de vieux papiers, et
de 5 à 25 % en poids, de préférence de 8 à 12 % en poids, de composition retardatrice de flamme,
sachant que les composants se complètent pour donner 100 % en poids.

7. Utilisation selon l'une des revendications précédentes, **caractérisée en ce que** la composition retardatrice de flamme contient du graphite expansible.
